# EUROPEAN PATENT SPECIFICATION

(11) **EP 0 526 256 B1**
(45) Date of publication and mention of the grant of the patent: **10.04.1996**
(21) Application number: 92307068.4
(22) Date of filing: 03.08.1992
(51) Int. Cl.: H01R 25/16, B01L 3/00, C12Q 1/70

(54) **Connectors**
Verbinder
Connecteurs

(30) Priority: 02.08.1991 GB 9116679
(43) Date of publication of application: 03.02.1993
(73) Proprietor: C & C MARSHALL LIMITED, Hastings, East Sussex TN34 1YJ (GB)
(72) Inventor: Smith, Patrick Hamilton, Boxhill-on-Sea, East Sussex (GB)
(74) Representative: Clifford, Frederick Alan

(56) References cited:
- DE-A- 2 358 895
- US-A- 4 093 330
- US-A- 4 671 585

## Description

This invention is concerned with improvements in and relating to connectors for making electrical connections to bus bar type electrical distribution systems and to mounting electrical accessories in or on trunking containing a busbar (see for example DE-A-2 358 895).

Connectors for use with busbar-in-trunking systems have contacts to make plug-in electrical connections directly with the busbar conductors. Such connectors may be used to provide a means of mounting electrical accessories relative to the trunking, preferably with a substantially flush appearance, e.g. a face-plate at or level with the surface of the trunking.

The present invention provides an electrical connector for use with a busbar-in-trunking system, which connector comprises an open-topped box capable of fitting within the trunking and of accommodating an electrical accessory mounted therein, the box having protruding downwardly through and from its floor a plurality of busbar-engaging contacts held and/or mounted in a mounting member, of insulating material and detachable with respect to the box, the mounting member being located in the box or forming at least part of the floor thereof, the said contact members being further provided with connection means, within the box, for making electrical contact with an electrical accessory.

The present invention further provides an electrical distribution system, comprising a busbar-in-trunking system and an electrical connector connectable therewith, the connector comprising an busbar-in-trunking system, which connector comprises a open-topped box capable of fitting within the trunking and of accommodating an electrical accessory mounted therein, the box having protruding downwardly through and from its floor a plurality of busbar-engaging contacts held and/or mounted in a mounting member, of insulating material and detachable with respect to the box, the mounting member being located in the box or forming at least part of the floor thereof, the said contact members being further provided with connection means, within the box, for making electrical contact with an electrical accessory.

The mounting member, holding the contacts, may itself form all or a part of the floor of the box or may be separately located in the box. It is generally convenient, though not essential, that the busbar-engaging connectors are positioned to one side (or end) of the box since this facilitates engagement of the contacts with the bus bars when siting the box in the trunking.

In order that the invention may be well understood reference will now be made to the accompanying drawings, in which:
Fig. 1 is a partially cut away perspective view of one embodiment of connector in accordance with the invention, having an electrical accessory in position;
Fig. 2 is a cross-section through the busbar-engaging contact/mounting member assembly of the connector shown in Fig. 1;
Fig. 3 is a perspective exploded view of the connector shown in Fig. 1;
Fig. 4 is a perspective view of the busbar-engaging connector/mounting assembly of the connector shown in Fig. 1;
Fig. 5 is an exploded view of the assembly shown in Fig. 4;
Fig. 6 is a partially cutaway perspective view of another embodiment of connector in accordance with the invention;
Fig. 7 is a section showing the busbar-engaging contact/mounting member assembly of the connector shown in Fig. 6;
Figs. 8 and 9 are perspective views illustrating stages in the assembly of the connector shown in Fig. 6;
Fig. 10 is a section through a further embodiment of connector in accordance with the invention in position in a trunking/busbar assembly;
Fig. 11 is an exploded view of the busbar engaging contact/mounting assembly of the connector shown in Fig. 10; and
Fig. 12 is a rear perspective view of an electrical accessory for engaging with the assembly shown in Fig. 11;

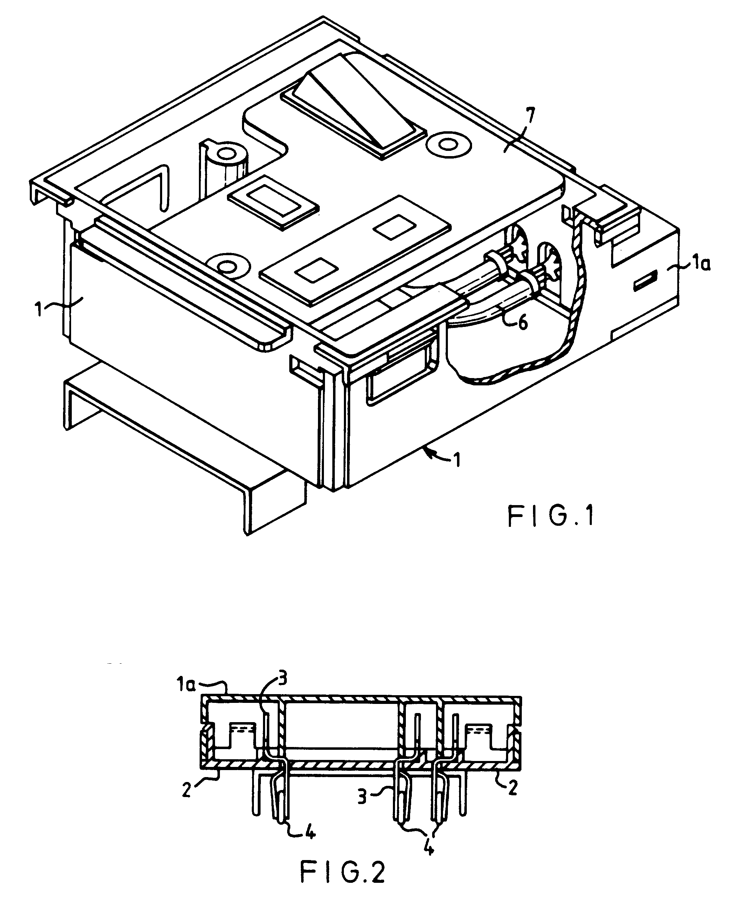

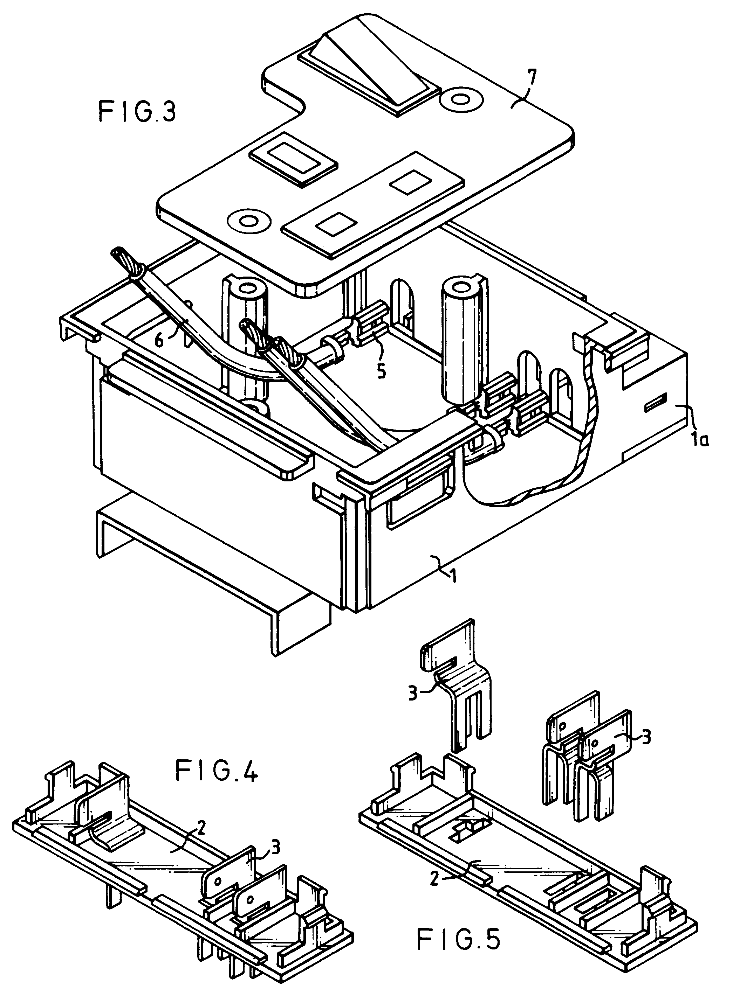

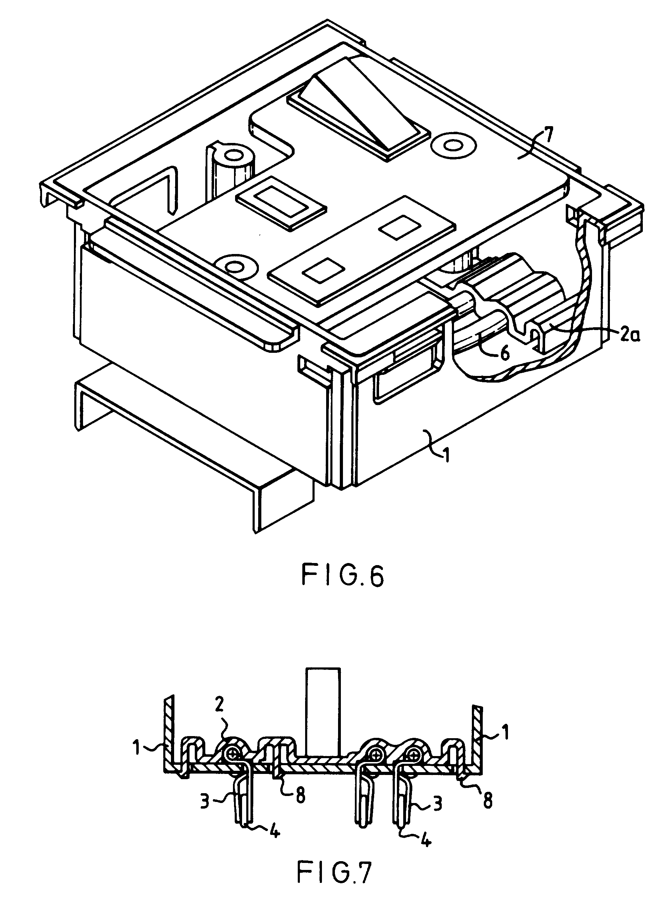

The connector shown in Figs. 1-5 comprises an open-topped box 1 having a protruding extension within which is mounted a busbar-engaging contact/mounting member assembly comprising a shaped mounting member 2 in which are mounted busbar-engaging connectors (see, especially Figs. 4 and 5). As shown in Fig. 2, contacts 4 extend downwardly through and from the floor of the box to engage with busbars 4 of a busbar/trunking assembly. At their upper ends contacts 3 are provided with suitably shaped fork portions to engage with spade connectors 5 which are, in turn, connected to insulated wires 6 within box 1. The other ends of wires 6 (i.e. those not connected to contacts 3) are connected to connectors provided on the undersurface of electrical accessory 7 (a switched socket assembly) which is mounted in the upper part of box 1. The whole assembly may be covered with a face-plate (not shown) provided with suitable apertures whereby the switch of the accessory 7 can be operated and a plug inserted into the socket holes of accessory 7.

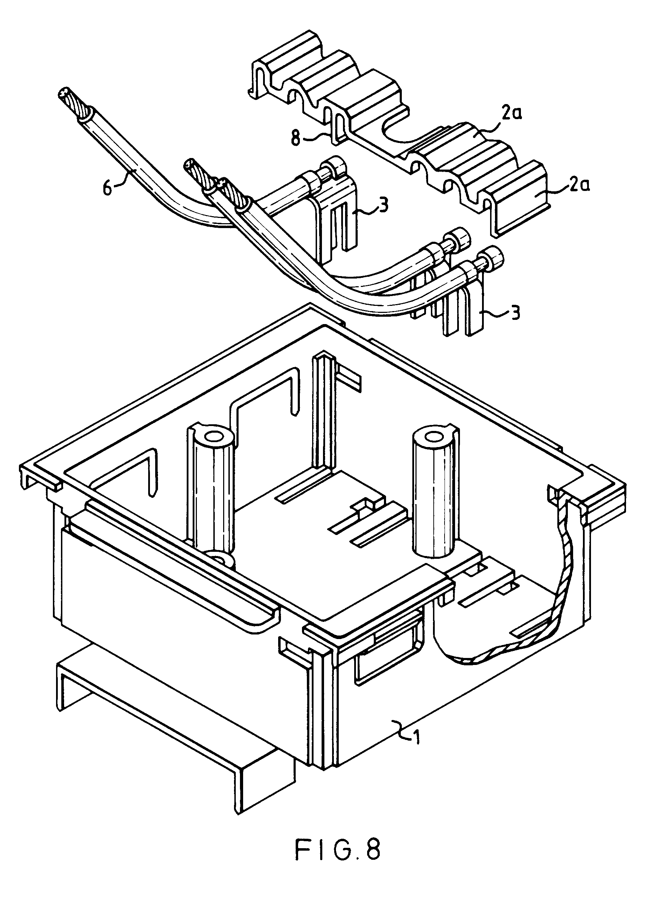

In the device shown in Figs. 1-5, the mounting member 2 for mounting and supporting the contacts 3 effectively forms a portion of the floor of the connector box. However, in accordance with another embodiment of the invention, as shown in Figs. 6-9, the connectors 3 may protrude through holes in an integral floor of the box and be held in position therein by means of a holding member 2a detachably located within the box by virtue of engagement of lugs 8 thereof in slots in the floor of the box.

The arrangement of the device shown in Figs. 6-9 is generally similar to that of the device shown in Figs. 1-5 in that electrical accessory 7 is connected to contacts 3 via flexible insulated connectors 6. In the case of the device shown in Figs. 6-9, however, the flexible connectors are connected to the contacts 3 by crimping and soldering.

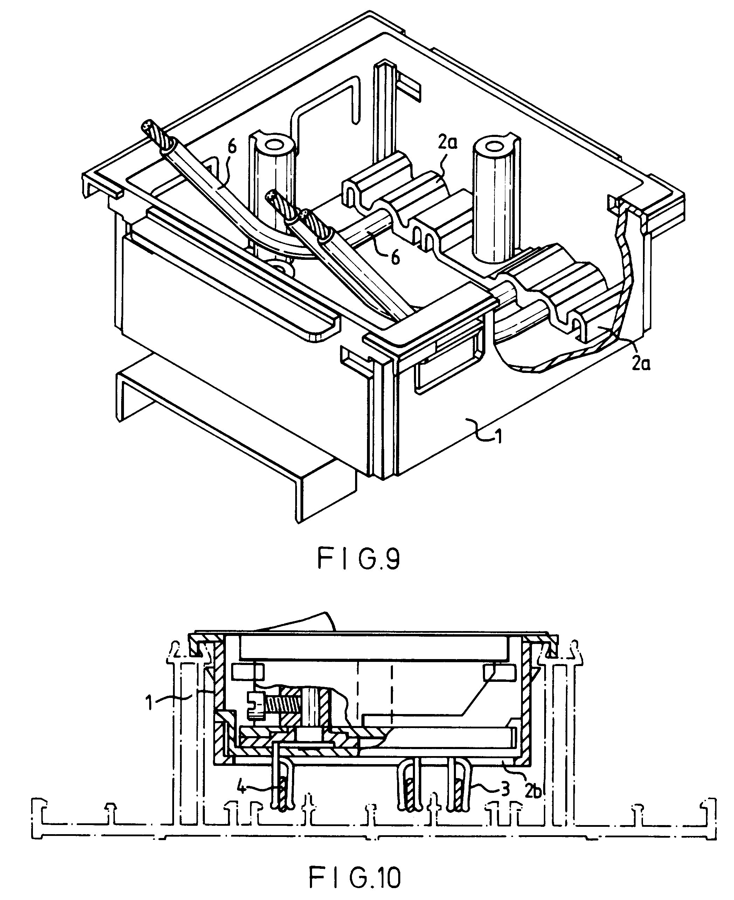

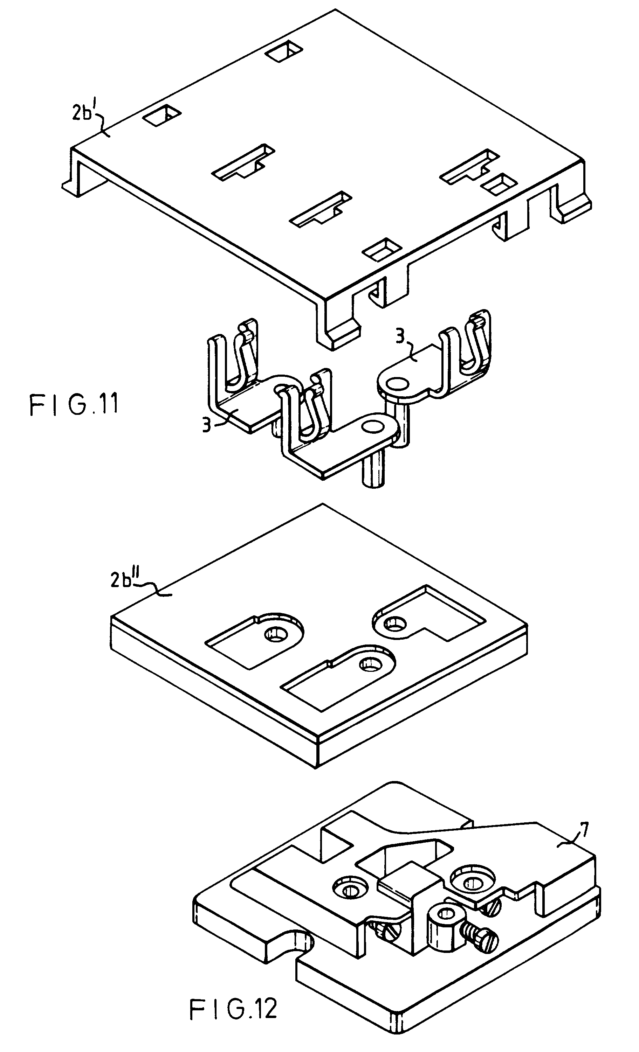

In the device shown in Figs. 10-12 of the drawings the mounting member, 2b, mounting the connectors 3 forms substantially the whole of the floor of box 1, see Fig. 10, is of two-part construction comprising a base part 2b′ and a holding part 2b˝ with connectors 3 sandwiched therebetween. Each connector 3 comprises a generally flat base having a busbar-engaging portion extending through slots in portion 2b′ and accessory engaging rigid connectors extending through holes in portion 2b˝ the positioning of the connectors being further controlled by recesses in the lower surface of member 2b'' (it being understood, of course, that, in Fig. 10, the whole assembly is shown in an inverted positon). The arrangement of the solid connectors extending upwardly through part 2b'' (governed by the arrangement of the holes in 2b'') is such that they may engage with appropriate connectors in the rear or lower surface of electrical accessory 7.

In a modification the apparatus shown in Figs. 10-12, member 2b' is replaced by an infilled encapsulating layer of a suitable resin, connectors 3 have first been put in place in member 2b''.

## Claims

1. An electrical connector for use with a bus bar-in-trunking system, which connector comprises an open-topped box (1) capable of fitting within the trunking and of accommodating an electrical accessory (7) mounted therein, the box having protruding downwardly through and from its floor a plurality of busbar-engaging contacts (3) held and/or mounted in a mounting member (2), of insulating material and detachable with respect to the box (1), the mounting member being located in the box or forming at least part of the floor thereof, the said contact members (3) being further provided with connection means (6), within the box (1), for making electrical contact with an electrical accessory (7).

2. An electrical connector as claimed in claim 1 in which the mounting member (2) forms the whole of the floor of the box (1).

3. An electrical connector as claimed in claim 1 in which the mounting member (2) is separate from the floor of the box (1).

4. An electrical connector as claimed in any one preceding claim in which the bus-bar engaging contacts are positioned to one side of the box (1) to facilitate engagements of the contacts (3) with the busbars when siting the box.

5. An electrical connector as claimed in any one preceding Claim, wherein, in use, a face-plate of the electrical accessory is level with the surface of the trunking.

6. An electrical distribution system, comprising a busbar-in-trunking system and an electrical connector connectable therewith, the connector comprising an busbar-in-trunking system, which connector comprises a open-topped box (1) capable of fitting within the trunking and of accommodating an electrical accessory (7) mounted therein, the box having protruding downwardly through and from its floor a plurality of busbar-engaging contacts (3) held and/or mounted in a mounting member (2), of insulating material and detachable with respect to the box (1), the mounting member being located in the box or forming at least part of the floor thereof, the said contact members (3) being further provided with connection means (6), within the box (1), for making electrical contact with an electrical accessory (7).

## Patentansprüche

1. Elektrischer Verbinder zur Venwendung bei einem Schienenverteiler. welcher Verbinder einen oben offenen Anschlußkasten (1) aufweist, der geeigret ist, in den Schienenkanal zu passen und eine darin angeordnetes elektrische Armatur (7) aufzunehmen, wobei der Anschlußkasten nach unten und aus dessen Boden herausragend eine Vielzahl von Schieneneingriffskontakten (3) aufweist, die in einem Befestigungsteil (2) gehalten und/oder angeordnet sind, und zwar aus Isoliermaterial und lösbar in bezug auf den Anschlußkästen (1) wobei das Befestigungsteil sich im Anschlußkästen befindet oder zumindest einen Teil seines Bodens bildet. wobei die Kontaktteile (3) ferner versehen sind mit Verbindungseinrichtungen (6), innerhalb des Anschlußkastens (1), zum Herstellen von elektrischem Kontakt mit der elektrischen Armatur (7).

2. Elektrischer Verbinder nach Anspruch 1, bei dem das Befestigungsteil (2) den gesamten Boden des Anschlußkastens (1) bildet.

3. Elektrischer Verbinder nach Anspruch 1, bei dem das Befestigungsteil (2) vom Boden des Anschlußkastens (1) getrennt ist.

4. Elektrischer Verbinder nach einem der vorhergehenden Ansprüche, bei dem die Schieneneingriffskontakte auf einer Seite des Anschlußkastens (1) positioniert sind, um das Ineingrifftreten der Kontakte (3) mit den Schienen zu erleichtern, wenn der Arschlußkasten plaziert wird.

5. Elektrischer Verbinder nach einem der vorhergehenden Ansprüche, wobei bei Verwerdung eine Frontplatte der elektrischen Armatur mit der Oberfläche des Schienenkanals glatt abschließt.

6. Elektrisches Verteilungssystem mit einen Schienenverteiler und einem damit verbindbaren elektrischen. Verbinder, wobei der Verbinder einen Schienenverteiler aufweist, welcher Verbinder einen oben offenen Anschlußkasten (1) aufweist, der geeignet, in den Schienenkanal zu passen und eine darin angeordnetes elektrische Armatur (7) aufzunehmen, wobei der Anschlußkasten nach unten und aus dessen Boden herausragend eine Vielzahl von Schieneneingriffskontakten (3) aufweist, die in einem Befestigungsteil (2) gehalten und/oder angeordret sind, und zwar aus Isoliermaterial und lösbar in bezug auf den Anschlußkasten (1), wobei das Befestigungsteil sich im Anschlußkasten befindet oder zumindest einen Teil seines Bodens bildet. wobei die Kontaktteile (3) ferner versehen sind mit Verbindungseinrichtungen (6), innerhalb des Anschlußkastens (1), zum Herstellen von elektrischem Kontakt mit einer elektrischen Armatur (7).

## Revendications

1. Connecteur électrique pour une utilisation avec un système de barres bus montées sur interconnexion, le connecteur comprenant un boîtier à partie supérieure ouverte (1) pouvant être emboîté à l'intérieur de l'interconnexion et pouvant recevoir un accessoire électrique (7) monté dedans, le boîtier comportant, faisant saillie vers le bas au travers de son fond et depuis celui-ci, une pluralité de contacts de raccordement aux barres bus (3) maintenus et/ou montés dans un élément de montage (2), en un matériau isolant, et pouvant être détachés du boîtier (1), l'élément de montage étant disposé dans le boîtier ou formant au moins une partie de son fond, lesdits éléments de contact (3) étant en outre munis d'un moyen de connexion (6), à l'intérieur du boîtier (1), pour réaliser un contact électrique avec un accessoire électrique (7).

2. Connecteur électrique selon la revendication 1, dans lequel l'élément de montage (2) forme la totalité du fond du boîtier (1).

3. Connecteur électrique selon la revendication 1, dans lequel l'élément de montage (2) est séparé du fond du boîtier (1).

4. Connecteur électrique selon l'une quelconque des revendications précédentes, dans lequel les contacts de raccordement aux barres bus sont positionnés sur un côté du boîtier (1) afin de faciliter le raccordement des contacts (3) avec les barres bus lors de la mise en place du boîtier.

5. Connecteur électrique selon l'une quelconque des revendications précédentes, dans lequel, en utilisation, une plaque avant de l'accessoire électrique est à niveau avec la surface de l'interconnexion.

6. Système de distribution électrique comprenant un système de barres bus montées sur interconnexion et un connecteur électrique pouvant lui être connecté, le connecteur comprenant un système de barres bus montées sur interconnexion, le connecteur comprenant un boîtier à partie supérieure ouverte (1) pouvant être emboîté à l'intérieur de l'interconnexion et pouvant recevoir un accessoire électrique (7) monté dedans, le boîtier comportant, faisant saillie vers le bas au travers de son fond et depuis celui-ci, une pluralité de contacts de raccordement aux barres bus (3) maintenus et/ou montés dans un élément de montage (2), en un matériau isolant, et pouvant être détachés du boîtier (1), l'élément dde montage étant disposé dans le boîtier ou formant au moins une partie de son fond, lesdits éléments de contact (3) étant en outre munis d'un moyen de connexion (6), à l'intérieur du boîtier (1), pour réaliser un contact électrique avec un accessoire électrique (7).
